# EUROPEAN PATENT APPLICATION

(11) **EP 1 666 267 A2**
(43) Date of publication of application: **07.06.2006**
(21) Application number: 05111311.6
(22) Date of filing: 25.11.2005
(51) Int. Cl.: B41J 11/00

(54) **Method and apparatus for printing image using firmware information provided through barcode**

(30) Priority: 26.11.2004 KR 200497991
(71) Applicant: SAMSUNG ELECTRONICS CO., LTD., Suwon-City, Kyungki-do (KR)
(72) Inventor: Ha, Jun-hyung, Gyeonggi-do (KR)
(74) Representative: Read, Matthew Charles

(57) **Abstract**

An image printing method and apparatus are provided for receiving firmware information for controlling a printing mode of a printing medium through a barcode and controlling the printing mode of the printing medium using the received firmware information. The image printing apparatus includes a sensing unit (410) which senses a barcode for providing information on a printing medium and generating a sensing signal, an extracting unit (420) which reads out barcode data from the sensing signal and extracts firmware information corresponding to the printing medium from the barcode data, a printing engine (490) unit which prints an image on the printing medium, and a controlling unit (480) which controls the printing engine unit based on the extracted firmware information.

## Description

The present invention relates to an image printing method and apparatus. More particularly, the present invention relates to an image printing method and apparatus for receiving firmware information for controlling a printing mode of a printing medium through a barcode and controlling the printing mode of the printing medium using the firmware information.

Recently, various kinds of printing media have been developed. A user selects a printing medium to print an image according to the kind of image, the kind of printer and the taste of the user. In the case of printing the image using different printing media, the firmware corresponding to the printing medium must be separately set such that the image is printed on the printing medium using the firmware which is most suitable for the environment of the printing medium. Accordingly, if a new printing medium is developed and thus a new firmware is requested, or if the firmware for a conventional printing medium is updated, then the information on the new or updated firmware must be provided to the user such that the user can print the image using the firmware which is most suitable for the environment of the printing medium.

Accordingly, a need exists for a system and method for effectively and efficiently providing firmware information for controlling a printing mode of a printing medium.

The present invention substantially solves the above and other problems, and provides an apparatus for providing firmware information of a printing medium through a barcode.

Embodiments of the present invention also provide a method for providing firmware information of a printing medium through a barcode.

Embodiments of the present invention also provide an apparatus for updating firmware of a printing medium through a barcode.

Embodiments of the present invention also provide a method for updating firmware of a printing medium through a barcode.

Embodiments of the present invention also provide an apparatus for printing an image using firmware information of a printing medium provided through a barcode.

Embodiments of the present invention also provide a method for printing an image using firmware information of a printing medium provided through a barcode.

According to an aspect of the present invention, a firmware information providing apparatus is provided comprising a sensing unit which senses a barcode for providing information on a printing medium and generates a sensing signal, an extracting unit which reads out barcode data from the sensing signal and extracts firmware information corresponding to the printing medium from the barcode data, and a providing unit which provides the extracted firmware information.

According to another aspect of the present invention, a firmware information updating apparatus is provided comprising a sensing unit which senses a barcode for providing information on a printing medium and generates a sensing signal, an extracting unit which reads out barcode data from the sensing signal and extracts firmware information on the printing medium from the barcode data, and an updating unit which receives firmware corresponding to the extracted firmware information through a network and updates the firmware.

According to another aspect of the present invention, an image printing apparatus is provided comprising a sensing unit which senses a barcode for providing information on a printing medium and generates a sensing signal, an extracting unit which reads out barcode data from the sensing signal and extracts firmware information on the printing medium from the barcode data, a printing engine unit which prints an image on the printing medium, and a controlling unit which controls the printing engine unit based on the extracted firmware information.

According to another aspect of the present invention, a firmware information providing method is provided comprising the steps of sensing a barcode for providing information on a printing medium and generating a sensing signal, reading out barcode data from the sensing signal and extracting firmware information on the printing medium from the barcode data, and providing the extracted firmware information.

According to another aspect of the present invention, a firmware information updating method is provided comprising the steps of sensing a barcode for providing information on a printing medium and generating a sensing signal, reading out barcode data from the sensing signal and extracting firmware information on the printing medium from the barcode data, and receiving firmware corresponding to the extracted firmware information through a network and updating the firmware.

According to another aspect of the present invention, an image printing method is provided comprising the steps of sensing a barcode for providing information on a printing medium and generating a sensing signal, reading out barcode data from the sensing signal and extracting firmware information on the printing medium from the barcode data, controlling the printing mode of the printing medium based on the extracted firmware information, and printing an image on the printing medium according to the printing mode.

The above and other aspects, features and advantages of the present invention will become more apparent by describing in detail exemplary embodiments thereof with reference to the attached drawings, in which:
Figure 1 is a functional block diagram of a firmware information providing apparatus for controlling a printing mode of a printing medium according to an embodiment of the present invention;
Figures 2A through 2D illustrate a barcode and barcode data for providing firmware information on a printing medium;
Figure 3 is a functional block diagram of a firmware information updating apparatus using the firmware information provided through the barcode according to another embodiment of the present invention;
Figure 4 is a functional block diagram of an image printing apparatus for printing an image on a printing medium using the firmware information provided through the barcode according to another embodiment of the present invention;
Figure 5 is a flowchart illustrating a firmware information providing method for controlling a printing mode of a printing medium according to an embodiment of the present invention;
Figure 6 is a flowchart illustrating a firmware information updating method using the firmware information provided through the barcode according to another embodiment of the present invention; and
Figure 7 is a flowchart illustrating an image printing method for printing an image on a printing medium using the firmware information provided through the barcode according to another embodiment of the present invention.

Throughout the drawings, like reference numerals will be understood to refer to like parts, components and structures.

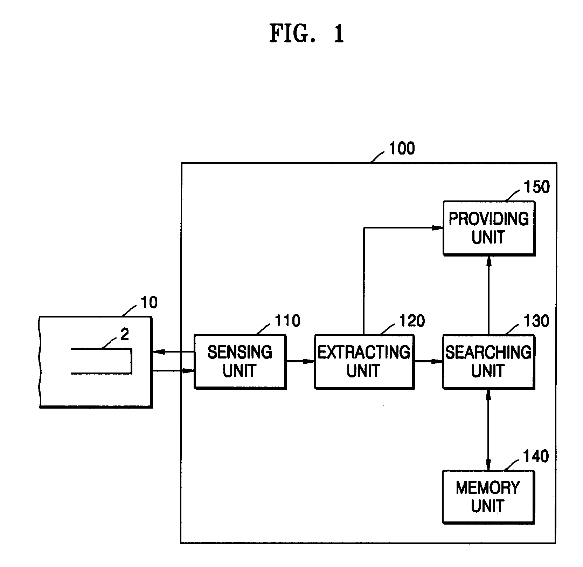

Figure 1 is a functional block diagram of a firmware information providing apparatus for controlling a printing mode of a printing medium according to an embodiment of the present invention. The firmware information providing apparatus according to embodiments of the present invention comprises a sensing unit 110, an extracting unit 120, a searching unit 130, a memory unit 140, and a providing unit 150.

The sensing unit 110 senses a barcode 2 written on a printing medium 10, and generates a sensing signal corresponding to the sensing result. The barcode 2 for providing firmware information on the printing medium is written on the printing medium 10.

The sensing unit 110 comprises a light emitting unit (not shown) and a light receiving unit (not shown). The light emitting unit emits light such as white light onto the barcode 2 written on the printing medium 10. The light receiving unit receives light reflected from the barcode and generates the sensing signal corresponding to the intensity of the reflected light.

The extracting unit 120 reads out the barcode data from the sensing signal and extracts the firmware information for controlling a printing mode corresponding to the printing medium from the barcode data. The extracting unit 120 reads out the barcode data from the sensing signal output from the sensing unit 110. The sensing signal output from the sensing unit 110 can comprise an analog electrical signal corresponding to the reflected light. More light is reflected from the white bars of the barcode than from the black bars. The extracting unit 120 reads out the barcode data by allocating 0 to the sections of the sensing signal having a value less than a threshold value and allocating 1 to the sections of the sensing signal having a value greater than the threshold value, in the analog electrical signal.

The firmware information on the printing medium 10 is extracted from the read out data. The barcode data contains information such as the type, version and firmware information of the printing medium. The type and version of the printing medium, and the corresponding firmware information of the printing medium for controlling the printing mode of the printing medium, are extracted from the barcode data.

The searching unit 130 searches the memory unit 140 to determine whether firmware corresponding to the extracted firmware information is stored in the memory unit 140. The firmware for controlling the printing mode of the printing medium 10 can be stored in the memory unit 140. The searching unit 130 searches the memory unit 140 to determine whether firmware for controlling the printing mode of the printing medium 10 is stored in the memory unit 140, and provides the search result to the providing unit 150. Preferably, the providing unit 150 is a display unit for displaying the search result.

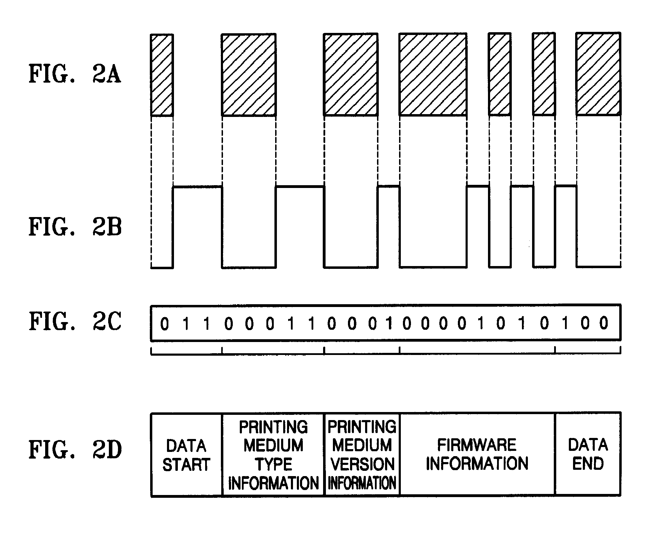

Figures 2A through 2D illustrate a barcode and barcode data for providing the firmware information on the printing medium. Figure 2(A) illustrates an example of the barcode 2, written on the printing medium 10, for providing the firmware for controlling the printing mode of the printing medium. Figure 2(B) illustrates the sensing signal generated by the sensing unit 110 when sensing the barcode 10. Figure 2(C) illustrates the barcode data read out using the sensing signal of the barcode 10. Figure 2(D) illustrates control parameters contained in the barcode data for controlling the printing mode of the printing medium. Several bits of barcode data can be allocated to each control parameter. For example, several bits of barcode data are allocated to a control parameter for expressing the start of the data (DATA START), and several bits of barcode data are allocated to a control parameter for expressing the end of the data (DATA END). The remainder of the barcode data is allocated to control parameters for providing the type, version and firmware information of the printing medium.

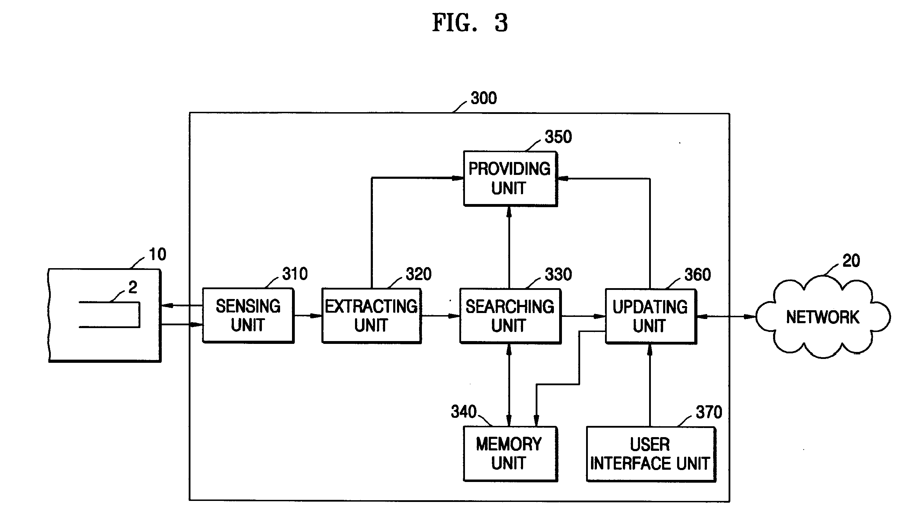

Figure 3 is a functional block diagram of a firmware information updating apparatus 300 using the firmware information provided through the barcode according to another embodiment of the present invention. The firmware information updating apparatus according to embodiments of the present invention comprises a sensing unit 310, an extracting unit 320, a searching unit 330, a memory unit 340, a providing unit 350, an updating unit 360, and a user interface unit 370. The sensing unit 310, extracting unit 320, searching unit 330, memory unit 340 and providing unit 350 in Figure 3 are respectively the same as the sensing unit 110, extracting unit 120, searching unit 130, memory unit 140 and providing unit 150 in Figure 1, and thus, a detailed description thereof will not be repeated for clarity and conciseness.

In the exemplary embodiment of Figure 3, the updating unit 360 receives the firmware corresponding to the extracted firmware information through a network 20 and stores it in the memory unit 350 to update the firmware. The updating unit 360 can be connected to a system for providing the firmware through the network 20. A user inputs a user command for updating the firmware through the user interface unit 370 based on the firmware information displayed on the providing unit 350 such as the display unit.

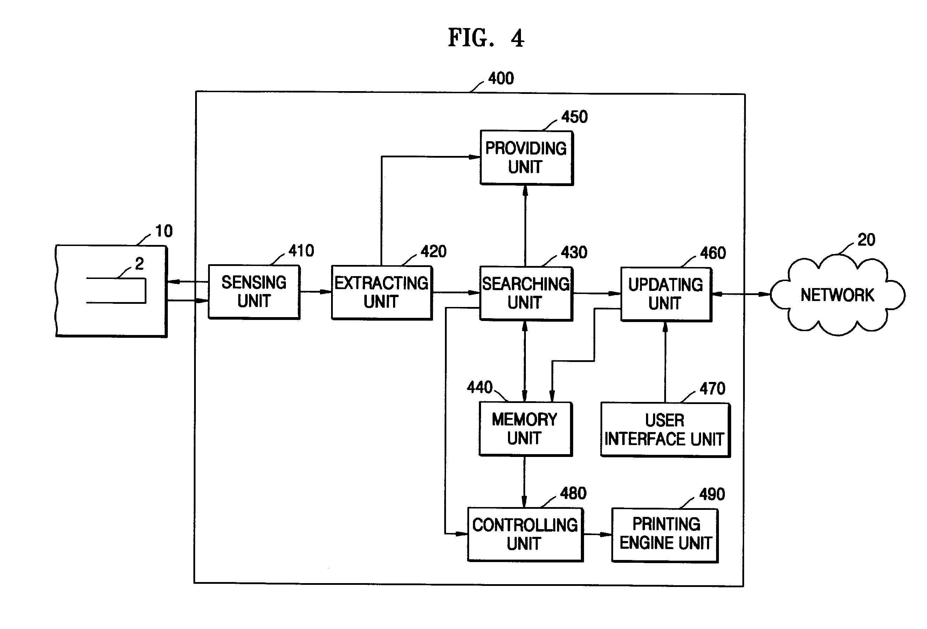

Figure 4 is a functional block diagram of an image printing apparatus 400 for printing an image on a printing medium using the firmware information provided through the barcode according to another embodiment of the present invention. The image printing apparatus according to embodiments of the present invention comprises a sensing unit 410, an extracting unit 420, a searching unit 430, a memory unit 440, a providing unit 450, an updating unit 460, a user interface unit 470, a controlling unit 480, and a printing engine unit 490. The sensing unit 410, extracting unit 420, searching unit 430, memory unit 440, providing unit 450, updating unit 460 and user interface unit 470 in Figure 4 are respectively the same as the sensing unit 310, extracting unit 320, searching unit 330, memory unit 340, providing unit 350, updating unit 360 and user interface unit 370 in Figure 3, and thus, a detailed description thereof will not be provided for clarity and conciseness.

In the memory unit 440, the firmware for controlling the printing mode of the printing medium can be stored. The firmware may be received through the network 20 to be stored in the memory unit 440 by the updating unit 460. The controlling unit 480 controls the printing mode of the printing engine unit 490 using the firmware corresponding to the printing medium 10. The printing engine unit 490 prints the image on the printing medium 10 according to the printing mode controlled by the controlling unit 480.

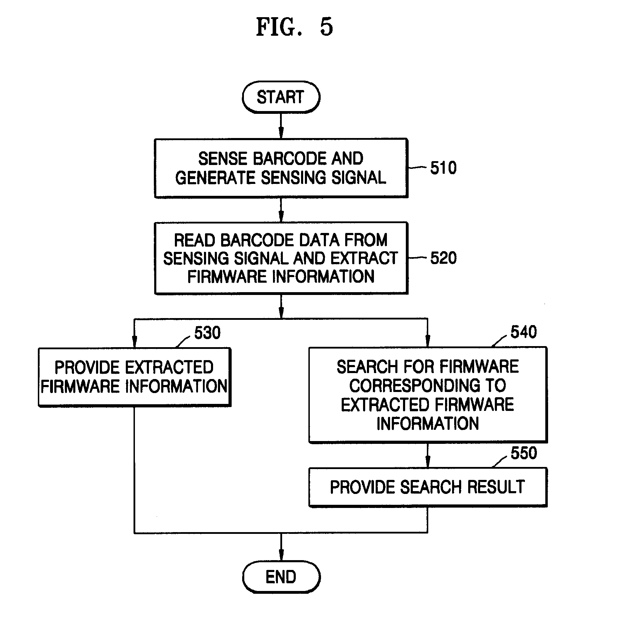

Figure 5 is a flowchart illustrating a firmware information providing method for controlling a printing mode of a printing medium according to an embodiment of the present invention. The barcode for providing the firmware information on the printing medium is first read out and the sensing signal corresponding to the sensing result of the barcode is generated by the sensing unit at operation 510. Then, the data contained in the barcode is read out from the sensing signal and the firmware information on the printing medium is extracted from the read out barcode data at operation 520. The read out barcode data contains the control parameters, such as the type, version and firmware information of the printing medium, for controlling the printing mode of the printing medium.

The extracted firmware information is displayed to the user through the providing unit such as the display unit at operation 530. The memory unit is searched for firmware corresponding to the extracted firmware information based on the extracted firmware information at operation 540, and the search result is displayed to the user through the display unit at operation 550.

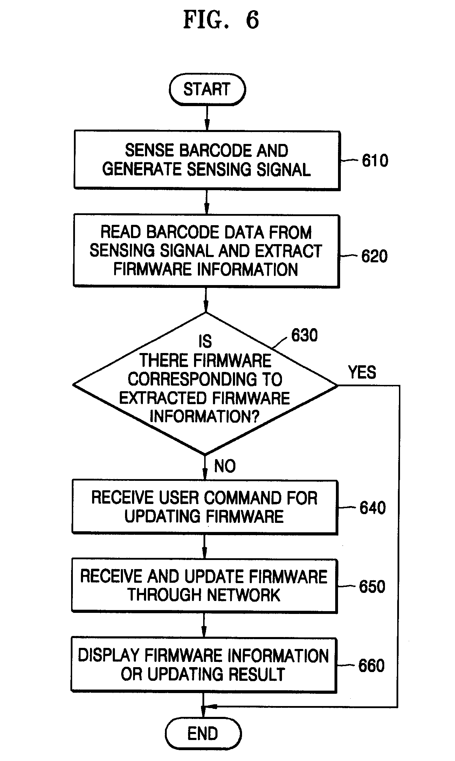

Figure 6 is a flowchart illustrating a firmware information updating method using the firmware information provided through the barcode according to another embodiment of the present invention. The firmware information is extracted from the barcode for providing the firmware information on the printing medium, and it is determined whether firmware corresponding to the extracted firmware information exists in the memory unit at operations 610 through 630. Operations 610 through 630 are respectively the same as operations 510 through 530 of Figure 5, and thus, a detailed description thereof will not be repeated for clarity and conciseness.

If the firmware corresponding to the extracted firmware information does not exist in the memory unit at (operation 630), the firmware information updating apparatus can be connected to a system for providing the firmware through a network and a user command for receiving the firmware is input at operation 640. For example, a web address for connecting the system can be input and a user command for receiving firmware corresponding to the extracted firmware information from the system can be input. The firmware is then received from the system and is stored in the memory unit to update the firmware at operation 650.

The firmware information or the update result is then displayed to the user through the display unit at operation 660.

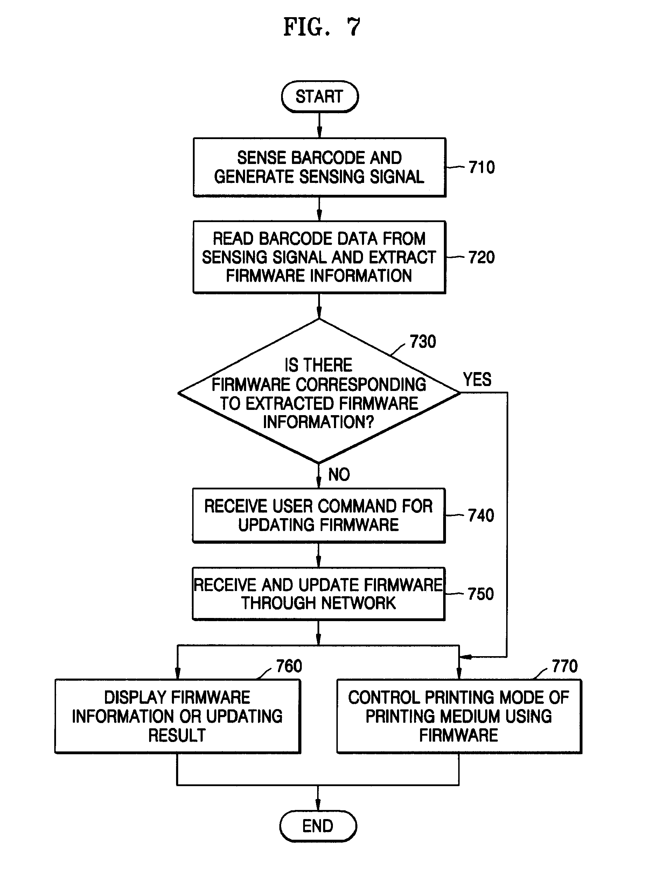

Figure 7 is a flowchart illustrating an image printing method for printing an image on a printing medium using the firmware information provided through the barcode according to another embodiment of the present invention. The firmware information is extracted from the barcode for providing the firmware information of the printing medium, and the firmware corresponding to the extracted firmware information is received through the network to update the firmware at operations 710 through 750. Operations 710 through 750 are respectively the same as operations 610 through 650 of Figure 6, and thus, a detailed description thereof will not be provided for clarity and conciseness.

The printing mode for printing the image is controlled using the updated firmware of the printing medium at operation 760. The printing mode for printing the image on the printing medium is determined according to the firmware, and the printing engine unit prints the image on the printing medium according to the printing mode. The extracted firmware information or the updating result of the firmware is displayed to the user through the display unit at operation 770.

The embodiments of the present invention can be written as computer programs and can be implemented in general-use digital computers that execute the programs using a computer-readable recording medium. Examples of the computer-readable recording medium include magnetic storage media (for example, ROM, floppy disk, hard disk, and so forth), optical recording media (for example, CD-ROM or DVD), and storage media such as carrier waves (for example, transmission via the internet).

The image printing method and apparatus according to embodiments of the present invention provide the firmware information on the printing medium through the barcode on the printing medium. By controlling the printing mode of the printing medium using the updated firmware information, the image can be printed in the most suitable printing mode.

While the present invention has been particularly shown and described with reference to exemplary embodiments thereof, it will be understood by those of ordinary skill in the art that various changes in form and detail may be made therein without departing from the scope of the present invention as defined by the following claims.

## Claims

1. A firmware information providing apparatus, comprising:
a sensing unit (110) for sensing a barcode for providing information on a printing medium and generating a sensing signal;
an extracting unit (120) for reading barcode data from the sensing signal and extracting firmware information corresponding to the printing medium from the barcode data; and
a providing unit (150) for providing the extracted firmware information.

2. The apparatus according to Claim 1, further comprising:
a memory unit (140) for storing firmware for controlling the printing mode of the printing medium; and
a searching unit (130) for searching for firmware corresponding to the extracted firmware information in the memory unit,
wherein the providing unit (150) is configured to provide the search result.

3. The apparatus according to Claim 1 or 2, wherein the providing unit comprises a display unit.

4. A firmware information updating apparatus, comprising:
a sensing unit (310, 410) for sensing a barcode for providing information on a printing medium and generating a sensing signal;
an extracting unit (320, 420) for reading barcode data from the sensing signal and extracting firmware information on the printing medium from the barcode data; and
an updating unit (360, 460) for receiving firmware corresponding to the extracted firmware information through a network and updating the firmware.

5. The apparatus according to Claim 4, further comprising:
a memory unit (340, 440) for storing firmware for controlling the printing mode of the printing medium; and
a searching unit (330, 430) for searching the memory unit to determine whether firmware corresponding to the extracted firmware information is stored in the memory unit.

6. An image printing apparatus, comprising:
a sensing unit (410) for sensing a barcode for providing information on a printing medium and generating a sensing signal;
an extracting unit (420) for reading barcode data from the sensing signal and extracting firmware information on the printing medium from the barcode data;
a printing engine unit (490) for printing an image on the printing medium; and
a controlling unit (480) for controlling the printing engine unit based on the extracted firmware information.

7. The apparatus according to Claim 6, further comprising:
a memory unit (440) for storing firmware for controlling the printing mode of the printing medium;
a searching unit (430) for searching the memory unit to determine whether firmware corresponding to the extracted firmware information is stored in the memory unit; and
an updating unit (460) for receiving firmware corresponding to the extracted firmware information through a network and updating the firmware based on the search result.

8. The apparatus according to Claim 5 or 7, further comprising a user interface for (370, 470) inputting a user command for updating the firmware based on the search result of the searching unit.

9. The apparatus according to Claim 8, further comprising a display unit for displaying at least one of the extracted firmware information and the firmware updating result.

10. A firmware information providing method, comprising the steps of:
sensing a barcode for providing information on a printing medium and generating a sensing signal;
reading out barcode data from the sensing signal and extracting firmware information on the printing medium from the barcode data; and
providing the extracted firmware information.

11. The method according to Claim 10, further comprising the steps of:
searching for firmware corresponding to the extracted firmware information based on the extracted firmware information; and
providing the search result.

12. A firmware information updating method, comprising the steps of:
sensing a barcode for providing information on a printing medium and generating a sensing signal;
reading out barcode data from the sensing signal and extracting firmware information on the printing medium from the barcode data; and
receiving firmware corresponding to the extracted firmware information through a network and updating the firmware.

13. The method according to Claim 12, further comprising the step of determining whether firmware corresponding to the extracted firmware information exists.

14. An image printing method, comprising the steps of:
sensing a barcode for providing information on a printing medium and generating a sensing signal;
reading out barcode data from the sensing signal and extracting firmware information on the printing medium from the barcode data;
controlling the printing mode of the printing medium based on the extracted firmware information; and
printing an image on the printing medium according to the printing mode.

15. The method according to Claim 14, further comprising the steps of:
determining whether firmware corresponding to the extracted firmware information exists; and
receiving firmware corresponding to the extracted firmware information through a network and updating the firmware based on the determining result.

16. The method according to Claim 13 or 15, further comprising the step of receiving a user command for updating the firmware based on the determining result.

17. The method according to Claim 16, further comprising the step of displaying at least one of the extracted firmware information and the firmware updating result.

18. A computer-readable medium having embodied thereon a computer program for providing firmware information, comprising:
a first set of instructions for controlling a sensing unit to sense a barcode for providing information on a printing medium and generate a sensing signal;
a second set of instructions for controlling an extraction unit to read out barcode data from the sensing signal and extract firmware information on the printing medium from the barcode data; and
a third set of instructions for controlling a providing unit to provide the extracted firmware information.
